# EUROPÄISCHE PATENTSCHRIFT

(11) **EP 2 808 568 B1**
(45) Veröffentlichungstag und Bekanntmachung des Hinweises auf die Patenterteilung: **04.07.2018**
(21) Anmeldenummer: 14152824.0
(22) Anmeldetag: 28.01.2014
(51) Int. Cl.: F16C 13/04, F16C 32/04, B23Q 1/76

(54) **Montagelager für Rotoren**
Mounting bearing for rotors
Palier support de rotors

(30) Priorität: 27.05.2013 DE 102013209828
(43) Veröffentlichungstag der Anmeldung: 03.12.2014
(73) Patentinhaber: Siemens Aktiengesellschaft, 80333 München (DE)
(72) Erfinder: Kühn, Helmut, 02894 Mengelsdorf (DE)

(56) Entgegenhaltungen:
- EP-A1- 0 190 402
- DE-A1-102011 007 852
- DE-B- 1 243 496
- DE-C- 468 323
- US-A1- 2010 163 705
- US-A1- 2010 244 347

## Beschreibung

### TECHNISCHES GEBIET

Die Erfindung bezieht sich auf mechanisch justierbare Montagelager für Rotoren, insbesondere auf ein Montagelager für Magnetlagerrotoren, beispielsweise für eine Turbomaschine, welches den Rotor in eine Rotorjustiervorrichtung aufnimmt. Ferner betrifft die Erfindung ein Verfahren zum Montagelagern eines Rotors.

### HINTERGRUND

Magnetlagerrotoren finden unter anderem in Turbomaschinen, beispielsweise in Dampf- oder Windturbinen Anwendung. Eine typische Turbomaschine weist einen sich drehenden Teil auf, welcher üblicherweise als Rotor oder Läufer bezeichnet wird, sowie einen unbewegten Teil, einen sogenannten Stator auf. Für die notwendige Lagerung des Rotors im Stator gibt es mehrere Möglichkeiten wie beispielsweise Öl- oder Magnetlager. Bei einem aktiven Magnetlager wird der Rotor innerhalb des Stators ohne Materialkontakt mittels magnetischer Kräfte gelagert. Zu Testzwecken bzw. zur Montage oder Endmontage des Rotors, beispielsweise in einer Turbomaschine, kann es erforderlich sein, den Rotor vorübergehend in ein Montagelager aufzunehmen.

DE 10 2011 007 852 A1 offenbart eine Montagevorrichtung zur Montage eines Rotors in einem Magnetlager. Die Montagevorrichtung weist eine Traverse und einen Rollenblock auf, auf welchem der Rotor während der Montage gelagert wird. Die Montagevorrichtung kann horizontal und vertikal verstellt werden, um den Rotor in eine gewünschte Ausrichtung zu bringen.

US 2010/0244347 A1 offenbart eine Vorrichtung und ein System zum Positionieren von Werkstücken, welche zylindrische oder konische Körper haben. Die Vorrichtung weist zwei hydraulische Zylinder auf, mit welchen zwei Rollen vertikal verstellt werden können. Ferner ist die Vorrichtung um Schwenkfüße verschwenkbar.

EP 0 190 402 A1 offenbart eine Vorrichtung zum Abstützen von Spindeln. Die Vorrichtung weist einen Träger und einen Rollenlagerbock auf. Der Rollenlagerbock umfasst zwei Rollen auf welchen eine Spindel drehbar aufgenommen werden kann. Der Rollenlagerbock ist auf einem Gewindestift mit einem halbkugelförmigen Kopf angeordnet, welcher eine Bewegung des Rollenlagerbocks um drei Achsen ermöglicht.

US 2010/0163705 A1 offenbart eine Vorrichtung zum Aufnehmen von Rotorsegmenten zum Verschweißen oder zur Inspektion. Die Vorrichtung weist eine Stützbaugruppe mit einer Trägereinheit und ein Betätigungssystem auf. Auf der Trägereinheit kann das Rotorsegment aufgenommen werden und mittels des Betätigungssystems kann das aufgenommene Rotorsegment vertikal verstellt werden.

DE 468 323 C offenbart eine einstellbare Rollenlagerung, welche eine Grundplatte und eine Lagerplatte mit daran verschiebbar befestigten Rollenböcken aufweist. Die Lagerplatte mit den Rollenböcken ist in Bezug auf die Grundplatte um eine vertikalen Achse drehbar. Ferner sind die beiden Rollenböcke jeweils um eine vertikale Achse drehbar.

DE 12 43 496 B offenbart eine Lünette zur Aufnahme eines Werkstücks. Die Lünette weist einen Lagerblock auf, welcher mit einem verschiebbaren Zapfen vertikal verstellt werden kann. Ferner ist der Lagerblock um ein Schwenklager verschwenkbar. Mit einem reibungsarmen Wälzlager kann ein Lünetten-Oberteil horizontal verstellt werden.

Gemäß einem exemplarischen Aspekt wird ein Montagelager für Rotoren geschaffen, insbesondere für Magnetlagerrotoren, wobei das Montagelager eine Rotorjustiervorrichtung und ein Justierelement aufweist, wobei die Rotorjustiervorrichtung eingerichtet ist, den Rotor bei der Montage des Rotors aufzunehmen, und wobei das Justierelement eingerichtet ist, die vertikale und/oder horizontale Lage des auf der Rotorjustiervorrichtung aufgenommenen Rotors zu justieren.

Insbesondere kann der Rotor bei dem Lagern bzw. der Montage unmittelbar oder direkt auf die Rotorjustiervorrichtung aufgelegt oder in eine Aufnahme derselben eingelegt werden. Ferner kann die Höhe sowie die seitliche Ausrichtung des in die Rotorjustiervorrichtung aufgenommenen Rotors eingestellt werden, so dass die Lage des Rotors während der Montage und/oder Testzwecken exakt oder nahezu exakt einer gewünschten Lage des Rotors entspricht.

Gemäß einem exemplarischen Aspekt wird ein Verfahren zum Montagelagern eines Rotors geschaffen, insbesondere eines Magnetlagerrotors in einem Montagelager, welches eine Rotorjustiervorrichtung und ein Justierelement aufweist, wobei das Verfahren das Aufnehmen des Rotors in der Rotorjustiervorrichtung, sowie das Justieren der vertikalen und/oder horizontalen Lage des auf der Rotorjustiervorrichtung aufgenommenen Rotors mittels des Justierelements aufweist.

Unter dem Begriff "Montagelager" kann insbesondere ein Lager oder eine Halterung für ein Bauteil verstanden werden, welches dazu verwendet wird oder dazu eingerichtet ist, das Bauteil während dieses montiert oder demontiert wird zu lagern. Das Montagelager unterscheidet sich von einem Betriebslager in der Hinsicht, dass ein Lagern im Montagelager dem einfachen Zugriff zum Rotor während der Montage oder Demontage dient. Insbesondere ist ein Betrieb mit hohen Drehzahlen, wie er bei einem Betriebslager der Fall ist, beim Montagelager nicht vorgesehen.

Unter dem Begriff "Magnetlagerrotor" kann der Teil einer Maschine, insbesondere einer Turbomaschine, verstanden werden, welcher sich während des Betriebs der Maschine um eine Achse, beispielsweise seine eigene Achse, dreht, wobei das Lagern des Rotors bezüglich eines während dem Betrieb unbewegten Stators kontaktfrei mittels magnetischer Kräfte erfolgt.

Unter dem Begriff "Rotorjustiervorrichtung" kann eine Vorrichtung verstanden werden, mittels welcher eine Lage bzw. Position des bei dem Lagern, insbesondere bei der Montage, aufgenommenen Rotors justiert bzw. eingestellt werden kann. Insbesondere kann die Rotorjustiervorrichtung ein Justierelement aufweisen und mittels diesem justiert werden. Hierdurch kann auch der aufgenommene Rotor in der Rotorjustiervorrichtung justiert werden. Alternativ kann das Justierelement getrennt von der Rotorjustiervorrichtung ausgebildet sein, beispielsweise kann es ein Teil eines Trägers sein, auf welchem die Rotorjustiervorrichtung bei der Montage gelagert sein kann, so dass die Rotorjustiervorrichtung mittels des Justierelements justiert werden kann.

Unter dem Begriff "Justierelement" kann ein Element verstanden werden, welches eingerichtet ist, eine Kraft auf die Rotorjustiervorrichtung auszuüben, welche eine Änderung der Lage der Rotorjustiervorrichtung und/oder des darin aufgenommenen Rotors bewirkt. Das Justierelement kann beispielsweise zumindest eine Stellschraube, zumindest eine Teleskopstange und/oder zumindest eine Gewindespindel aufweisen oder daraus gebildet sein.

Das Bereitstellen eines Montagelagers für Rotoren gemäß einem exemplarischen Aspekt kann ein einfaches Einstellen beziehungsweise Vorgeben der Lage des Rotors bei der Montage ermöglichen. Insbesondere kann die Bereitstellung einer Rotorjustiervorrichtung den Vorteil haben, dass der darin oder darauf aufgenommene Rotor bei der Montage genau auf die Höhe oder Lage gebracht werden kann, welche er nachfolgend im Betrieb ebenfalls einnimmt. Beispielsweise kann der Rotor während der Montage in den Stator exakt in der Mitte des Stators positioniert werden, was bei einem herkömmlichen Lagern bei der Montage, beispielsweise in einem Magnetlager bzw. einem Öllager nicht möglich ist. Insbesondere würde bei einem Magnetlager ein einfaches Aufliegen des Rotors auf dem Magnetlager selber bei der Montage dazu führen, dass der Rotor der Abstand, um den sich der Rotor im Betrieb oberhalb des Stators befindet (Luftspalt zwischen Stator und Rotor) bei der Montage nicht vorhanden ist. Der Rotor sich bei der Montage folglich an einer anderen Position befinden würde wie er sich im Betreib befindet. Dieser Abstand oder das Spiel zwischen Rotor/Läufer und Lager/Stator beträgt in einem herkömmlichen Magnetlager beispielsweise 1 - 1,5 mm.

Anschaulich kann mittels des Montagelagers gemäß einem exemplarischen Aspekt somit eine Vorrichtung oder ein Element geschaffen werden, welches bei der Montage eines Rotors, beispielsweise eines Magnetrotors, ermöglichen kann, dass der Rotor sich bei der Montage, wenn er in dem Montagelager gelagert ist, in zumindest nahezu der gleichen Position oder Lage befindet, wie er sich im Betriebszustand des Rotors bzw. einer Turbinenmaschine, von der der Rotor ein Teil ist, befinden würde. Somit kann es sein, dass die Montage und/oder ein darauf anschließend stattfindender Testbetrieb vereinfacht wird bzw. dessen Aussagekraft verbessert wird.

Nachfolgend werden exemplarische Ausführungsbeispiele des Montagelagers beschrieben. Jedoch gelten die entsprechenden Ausgestaltungen und Merkmale auch für das Verfahren zum Magnetlagern eines Rotors.

Gemäß einem exemplarischen Ausführungsbeispiel weist das Montagelager ferner zumindest eine Stellschraube auf, wobei die vertikale und/oder horizontale Lage des Rotors mittels der zumindest einen Stellschraube justierbar ist.

Insbesondere kann die zumindest eine Stellschraube an der Rotorjustiervorrichtung angebracht sein und/oder auf diese wirken. Beispielsweise kann die zumindest eine Stellschraube an einem Träger angebracht sein, auf welchem die Rotorjustiervorrichtung aufgelegt oder angebracht wird. Mittels Verstellens der zumindest einen Stellschraube lässt sich somit eine Kraft auf die Rotorjustiervorrichtung übertragen, was zu einer Lageänderung der Rotorjustiervorrichtung führt und damit des darauf oder darin aufgenommenen Rotors. Alternativ oder zusätzlich kann die zumindest eine Stellschraube auch an der Rotorjustiervorrichtung angebracht sein, so dass mittels Verstellens der zumindest einen Stellschraube direkt auf die Lage des aufgenommenen Rotors oder auf einen Träger auf den die Rotorjustiervorrichtung aufgelegt oder befestigt ist eingewirkt werden kann.

Gemäß einem anderen exemplarischen Ausführungsbeispiel des Montagelagers ist die vertikale und/oder horizontale Lage des Rotors mittels einer Drehung der Rotorjustiervorrichtung um mindestens einen Drehpunkt justierbar.

Insbesondere kann mittels der Stellschrauben eine Seite der Rotorjustiervorrichtung angehoben bzw. abgesenkt werden, wobei die andere Seite nicht bewegt wird bzw. entsprechend in die entgegengesetzte Richtung bewegt wird. Die daraus resultierende Drehbewegung an der Rotorjustiervorrichtung kann eine Drehbewegung des in der Rotorjustiervorrichtung aufgenommenen Rotors bewirken. Das Vorsehen einer Drehung um einen Drehpunkt zur Justierung kann insbesondere eine einfache Art und Weise sein, das Justieren der Lage des Rotors durchzuführen. Insbesondere kann durch eine Drehung möglich sein durch die Verwendung eines einzelnen Justierelements die Lage des Rotors sowohl in vertikaler als auch horizontaler Richtung zu verändern bzw. zu justieren.

Gemäß einem anderen exemplarischen Ausführungsbeispiel des Montagelagers weist die Rotorjustiervorrichtung Führungsrollen auf, welche eingerichtet sind, den aufgenommenen Rotor drehbar zu lagern.

Das Vorsehen von Führungsrollen an der Rotorjustiervorrichtung kann insbesondere den Vorteil haben, dass somit eine einfache und effiziente Möglichkeit geschaffen wird, den Rotor während der Aufnahme bzw. dem Lagern und der nachfolgenden Montage zu drehen.

Gemäß einem anderen exemplarischen Ausführungsbeispiel des Montagelagers weist die Rotorjustiervorrichtung einen Führungsbolzen auf, welcher derart eingerichtet ist, dass die Führungsrollen entlang einer Achse, insbesondere einer Längsachse, des Führungsbolzens horizontal verstellbar sind.

Insbesondere kann der Führungsbolzen oder Führungsgestänge somit einer Führung einer translatorischen Bewegung der Führungsrollen dienen. Er kann eingerichtet sein, um die Führungsrollen entlang seiner horizontalen Achse zu bewegen, was den Vorteil einer einfachen Einstellung der horizontalen Lage haben kann. Hierzu kann der Führungsbolzen bezüglich der Rotorjustiervorrichtung stationär, d.h. nicht bewegbar, ausgebildet sein, so dass er als reine passive Führung dient, beispielsweise indem die Führungsrollen sich entlang des Führungsbolzens bewegen. Alternativ kann der Führungsbolzen selber auch bewegbar sein, beispielsweise in Form eines Teleskopelements mittels dessen die Führungsrollen aktiv bewegt werden können.

Gemäß einem anderen exemplarischen Ausführungsbeispiel des Montagelagers ist die Rotorjustiervorrichtung als Rotorjustierblech ausgebildet.

Unter dem Begriff "Rotorjustierblech" oder "Blech" allgemein kann insbesondere eine flache Metallscheibe oder Metallplatte verstanden werden, welche eingerichtet ist, einen Läufer bzw. einen Rotor bei der Montage aufzunehmen, wobei das Rotorjustierblech mittels des Justierelements bewegt werden kann, um die Lage des darin aufgenommenen Rotors einzustellen. Unter flach kann insbesondere verstanden werden, dass die Ausmaße des Rotorjustierblechs in einer Dimension deutlich, beispielsweise um mindestens einen Faktor 5, geringer sind als in den beiden anderen Dimensionen.

Die Ausbildung der Rotorjustiervorrichtung als Rotorjustierblech kann insbesondere den Vorteil haben, dass der Platzbedarf der Rotorjustiervorrichtung besonders gering sein kann. Beispielsweise kann es möglich sein, dass in einer Ausführungsform die axiale Länge des gesamten Montagelagers die Dicke des Rotorjustierblechs nicht überschreitet.

Gemäß einem anderen exemplarischen Ausführungsbeispiel des Montagelagers weist das Rotorjustierblech einen weiteren Führungsbolzen auf, welcher dazu eingerichtet ist, während dem Justieren der vertikalen Lage des Rotors als Führung zu dienen.

Insbesondere kann die vertikale Bewegung der Rotorjustiervorrichtung mittels einer Gabel geführt werden, wobei die Gabel eingerichtet ist, die Bewegung des weiteren Führungsbolzens zu führen. Der weitere Führungsbolzen kann hierbei ein Teil der Rotorjustiervorrichtung und vertikal in der Gabel verschiebbar sein.

Zusammenfassend kann eine Grundidee eines exemplarischen Ausführungsbeispiels darin gesehen werden, eine Vorrichtung und ein Verfahren bereitzustellen, welche ein einfaches und genaues Justieren eines Rotors während der Montage, Wartung, Demontage oder zu Testzwecken ermöglichen, indem der Rotor in ein Montagelager aufgenommen werden kann, welches einfach in alle Richtungen verstellbar ist und mittels welchem der Rotor genau auf die Höhe oder Lage gebracht werden kann, welche er nachfolgend im Betrieb einnimmt.

### KURZE BESCHREIBUNG DER ZEICHNUNGEN

Fig. 1 zeigt eine schematische Darstellung eines Montagelagers gemäß einem ersten exemplarischen Ausführungsbeispiel.
Fig. 2 zeigt eine Seitenansicht des Montagelagers aus Fig. 1.
Fig. 3 zeigt eine schematische Darstellung eines Montagelagers gemäß einem weiteren exemplarischen Ausführungsbeispiel.
Fig. 4 zeigt eine schematische Darstellung eines Montagelagers gemäß einem weiteren exemplarischen Ausführungsbeispiel.
Fig. 5 zeigt eine Seitenansicht des Montagelagers aus Fig. 4.

### AUSFÜHRLICHE BESCHREIBUNG DER ZEICHNUNGEN

Es wird darauf hingewiesen, dass Merkmale bzw. Komponenten von unterschiedlichen Ausführungsformen, die mit den entsprechenden Merkmalen bzw. Komponenten der Ausführungsform nach gleich oder zumindest funktionsgleich sind, mit den gleichen Bezugszeichen oder mit anderen Bezugszeichen versehen sind, welche sich lediglich in ihrer ersten Ziffer von dem Bezugszeichen eines (funktional) entsprechenden Merkmals oder einer (funktional) entsprechenden Komponente unterscheiden. Zur Vermeidung von unnötigen Wiederholungen werden teilweise bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen oder Ausführungsbeispiele lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

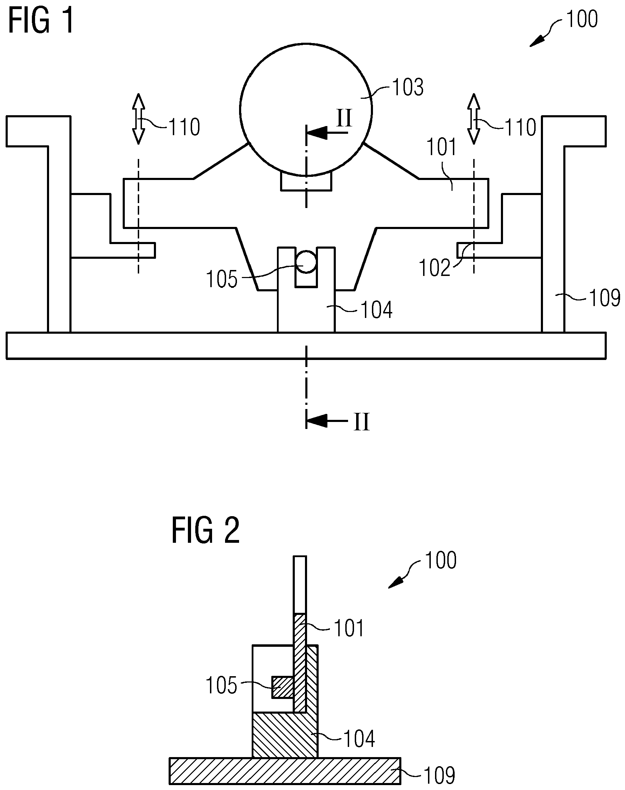

Fig. 1 zeigt eine schematische Darstellung eines Montagelagers gemäß einem ersten exemplarischen Ausführungsbeispiel. Insbesondere zeigt Fig. 1 ein Montagelager 100, welches eingerichtet ist, einen Rotor 103 in eine Rotorjustiervorrichtung 101 aufzunehmen. Ferner weist das Montagelager 100 ein Justierelement 102 auf, mittels welchem eine Einstellung von horizontaler und/oder vertikaler Ausrichtung des Rotors 103 auf einfache Art und Weise ermöglicht wird. Das Justierelement kann hierbei beispielsweise als Schraube, insbesondere Stellschraube, Spindel oder in Form eines Teleskopelements ausgebildet sein. Generell kann das Justierelement auf alle Arten ausgebildet sein, welche es ermöglichen, dass mittels diesem eine horizontale und/oder vertikale Einstellung oder Justage des Rotors direkt oder indirekt über die Einstellung der Rotorjustiervorrichtung ermöglicht wird. D.h. eine solche Einstellung oder Justage kann hierbei insbesondere dadurch vorgenommen werden, dass die Rotorjustiervorrichtung 101 und damit der aufgenommene Rotor selbst in ihrer Lage oder Position verändert werden kann. Alternativ kann auch die Einstellung oder Justage mittels Stell- oder Justierelementen durchgeführt werden, welche an der Rotorjustiervorrichtung 101 angebracht sind und auf welche der Rotor aufgelegt oder gelagert wird. Im Beispiel der Fig. 1 weist die Rotorjustiervorrichtung einen Führungsbolzen 105 auf, der vertikal in einer Gabel 104 verschiebbar ist. Mittels einer solchen Führung aus Führungsbolzen 105 und Gabel 104 ist es möglich eine vertikale Bewegung der Rotorjustiervorrichtung 101 zu führen. Eine solche vertikale Bewegung, mittels der die Lage der Rotorjustiervorrichtung und damit des darauf gelagerten Rotors eingestellt oder justiert werden kann, ist mittels der Doppelpfeile 110 angedeutet. Die vertikale Bewegung kann hierbei beispielsweise mittels Stellschrauben vorgenommen werden. Mittels solcher Stellschrauben kann die Rotorjustiervorrichtung an einem Träger oder Traggestell 109 befestigt oder gelagert sein, welches wiederum fest in einer Montagehalle montiert sein kann oder ebenfalls beweglich ist. Durch das Lagern der Rotorjustiervorrichtung auf dem Tragegestell mittels der Stellschrauben, d.h. dem Justierelement, kann die horizontale und/oder vertikale Einstellbarkeit der Position oder Lage des gelagerten Rotors 103 ermöglicht werden.

Fig. 2 zeigt eine Schnittansicht des Montagelagers aus Fig. 1 entlang der Linie II-II in Fig. 1. Insbesondere zeigt Fig. 2 das Montagelager 100, welches die Rotorjustiervorrichtung 101 aufweist. In Fig. 2 ist insbesondere zu erkennen, dass die Rotorjustiervorrichtung in Form eines Bleches, beispielsweise eines Metallbleches, ausgebildet ist. Der Führungsbolzen 105 ist vertikal in der Gabel 104 verschiebbar, wodurch eine Führung der Rotorjustiervorrichtung bei einer vertikalen Bewegung derselben ermöglich wird. Die Gabel 104 kann hierbei insbesondere an dem Träger oder Traggestell 109 oder an einem Boden befestigt sein.

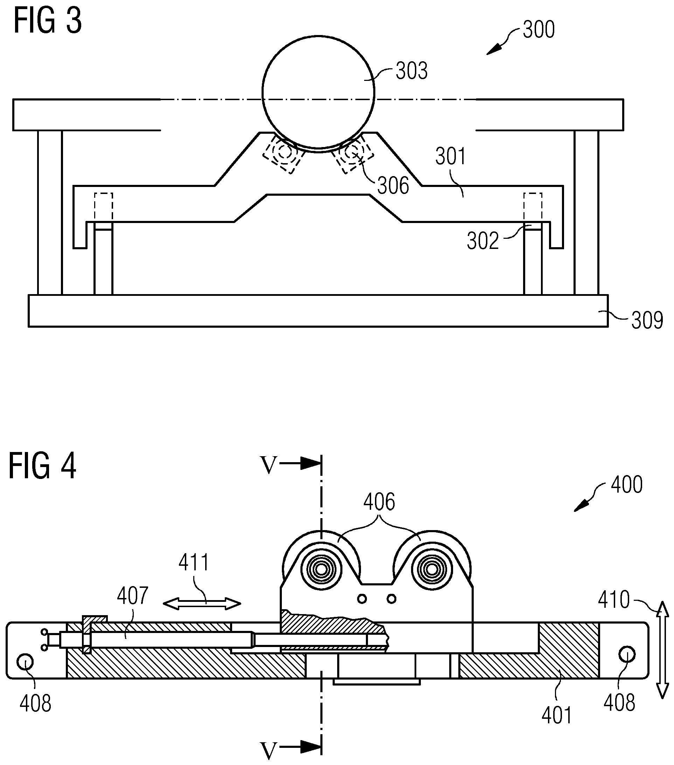

Fig. 3 zeigt eine schematische Darstellung eines Montagelagers gemäß einem weiteren exemplarischen Ausführungsbeispiel. Insbesondere zeigt Fig. 3 ein Montagelager 300, welches eine Rotorjustiervorrichtung 301 sowie ein Justierelement 302 aufweist. Wie im Beispiel der Fig. 1 kann das Justierelement hierbei beispielsweise als Schraube, insbesondere Stellschraube, Spindel oder in Form eines Teleskopelements ausgebildet sein. Im Beispiel der Fig. 3 ist ein Rotor 303 in die Rotorjustiervorrichtung 301 aufgenommen, indem er drehbar auf Führungsrollen 306 gelagert ist. Die Führungsrollen 306 an der Rotorjustiervorrichtung 301 können insbesondere den Vorteil haben, dass somit eine einfache und effiziente Möglichkeit geschaffen wird, den Rotor 303 während der Aufnahme bzw. dem Lagern und der nachfolgenden Montage zu drehen. Die Führungsrollen 306 können fest an der Rotorjustiervorrichtung 301 montiert sein, alternativ können sie in ihrer Lage vertikal und/oder horizontal verstellbar sein und damit auf einfache Art und Weise eine Änderung der Lage oder Position des darauf aufliegenden Rotors 303 bewirken. Insbesondere können die Führungsrollen 306 einzeln verstellt werden, was weitere Möglichkeiten zur Ausrichtung des Rotors bereitstellen kann, beispielsweise indem eine erste von zwei Führungsrollen horizontal verstellt wird, während die Lage der zweiten Führungsrolle nicht geändert oder in die entgegengesetzte Richtung verstellt wird. Die Rotorjustiervorrichtung 301 kann an einem Träger oder Traggestell 309 befestigt oder gelagert sein, welches wiederum fest in einer Montagehalle montiert sein kann oder ebenfalls beweglich ist.

Fig. 4 zeigt eine schematische Darstellung eines Montagelagers gemäß einem weiteren exemplarischen Ausführungsbeispiel. Insbesondere zeigt Fig. 4 ein Montagelager 400, welches eine Rotorjustiervorrichtung 401 aufweist. Im Beispiel der Fig. 4 kann der Rotor in Führungsrollen 406 der Rotorjustiervorrichtung 401 aufgenommen werden, welche entlang einer Achse eines weiteren Führungsbolzens 407 horizontal verstellbar sind. Insbesondere können die Führungsrollen ein Paar von Führungsrollen sein, wobei jede Führungsrolle einzeln verschiebbar sein kann, d.h. der Abstand zwischen den Führungsrollen kann einstellbar sein, was beispielsweise von Vorteil sein kann, wenn auf das Montagelager Rotoren von unterschiedlicher Größe, d.h. mit unterschiedlichen Durchmessern nacheinander aufgelegt werden sollen. Insbesondere kann es für eine stabile Lagerung eines Rotors mit großem Durchmesser von Vorteil sein, den Abstand zwischen den Führungsrollen größer einzustellen als beim Lagern eines Rotors mit geringerem Durchmesser. Die horizontale Verschiebung der Führungsrollen ist durch den Doppelpfeil 411 angedeutet. Die Einstellung in vertikaler Richtung erfolgt mittels des Justierelements und ist durch den Doppelpfeil 410 angedeutet. Zudem ist die vertikale und/oder horizontale Lage des Rotors mittels einer Drehung der Rotorjustiervorrichtung 401 um Drehpunkte 408 justierbar. Insbesondere kann der weitere Führungsbolzen 407 somit einer Führung einer translatorischen Bewegung der Führungsrollen 406 dienen. Er kann eingerichtet sein, die Führungsrollen 406 entlang seiner horizontalen Achse zu bewegen, was den Vorteil einer einfachen Einstellung der horizontalen Lage haben kann.

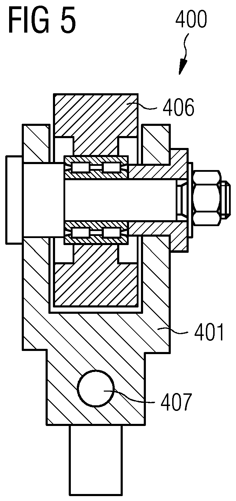

Fig. 5 zeigt eine Schnittansicht des Montagelagers aus Fig. 4 entlang der Linie V-V in Fig. 4. Insbesondere zeigt Fig. 5 das Montagelager 400, welches die Rotorjustiervorrichtung 401 aufweist. Der Rotor kann in die Führungsrollen 406 der Rotorjustiervorrichtung 401 aufgenommen werden, welche entlang der Achse des Führungsbolzens 407 horizontal verstellbar sind.

Die Ausführung der Erfindung ist nicht auf diese Anwendungsfälle und die weiter oben erwähnten Systemkonfigurationen beschränkt, sondern ebenso in einer Vielzahl von Abwandlungen möglich, die im Rahmen fachgemäßen Handelns liegen. Die Erfindung wird nur durch die hinzugefügten Ansprüche definiert. Ferner sollte darauf hingewiesen werden, dass Bezugszeichen in den Ansprüchen nicht als beschränkend aufzufassen sind und dass die Begriffe "aufweisen" bzw. "aufweisend" und ähnliche Begriffe nicht das Vorhandensein von weiteren Elementen oder Schritten ausschließt. Auch schließt ein Aufzählen als mehrere Mittel oder Elemente nicht aus, dass diese Mittel oder Elemente als ein einziges Mittel oder Element ausgebildet werden können.

## Patentansprüche

1. Montagelager (100) für Rotoren (103), insbesondere Magnetlagerrotoren, wobei das Montagelager (100) aufweist:
eine Gabel (104);
eine Rotorjustiervorrichtung (101), welche einen Führungsbolzen (105) aufweist, und
ein Justierelement (102), wobei die Rotorjustiervorrichtung (101) eingerichtet ist, den Rotor (103) bei der Montage des Rotors (103) aufzunehmen; und
wobei das Justierelement (102) eingerichtet ist, die vertikale und/oder horizontale Lage des auf der Rotorjustiervorrichtung (101) aufgenommenen Rotors (103) zu justieren;
wobei der Führungsbolzen (105) der Rotorjustiervorrichtung (101) vertikal in der Gabel (104) verschiebbar ist.

2. Montagelager (100) nach Anspruch 1, welches ferner zumindest eine Stellschraube (102) aufweist, wobei die vertikale und/oder horizontale Lage des Rotors (103) mittels der zumindest einen Stellschraube (102) justierbar ist.

3. Montagelager (100) nach Anspruch 1 oder 2, wobei die vertikale und/oder horizontale Lage des Rotors mittels einer Drehung der Rotorjustiervorrichtung (101) um mindestens einen Drehpunkt (408) justierbar ist.

4. Montagelager (100) nach einem der Ansprüche 1 bis 3, wobei die Rotorjustiervorrichtung (101) Führungsrollen (306, 406) aufweist, welche eingerichtet sind, den aufgenommenen Rotor (103) drehbar zu lagern.

5. Montagelager (100) nach Anspruch 4, wobei die Rotorjustiervorrichtung (101) einen Führungsbolzen (407) aufweist, welcher derart eingerichtet ist, dass die Führungsrollen (406) entlang einer Achse des Führungsbolzens (407) horizontal verstellbar sind.

6. Montagelager (100) nach Anspruch 1 bis 5, wobei die Rotorjustiervorrichtung (101, 301, 401) als Rotorjustierblech ausgebildet ist.

7. Verfahren zum Montagelagern eines Rotors (103), insbesondere eines Magnetlagerrotors in einem Montagelager (100), welches eine Rotorjustiervorrichtung (101) und ein Justierelement (102) aufweist, wobei die Rotorjustiervorrichtung (101) einen Führungsbolzen (105) aufweist, welcher in einer Gabel (104) des Montagelagers (100) während dem Justieren der vertikalen Lage des Rotors (103) vertikal verschiebbar ist; wobei das Verfahren aufweist:
Aufnehmen des Rotors (103) in der Rotorjustiervorrichtung (101), Justieren der vertikalen und/oder horizontalen Lage des auf der Rotorjustiervorrichtung (101) aufgenommenen Rotors (103) mittels des Justierelements (102).

## Claims

1. Mounting bearing (100) for rotors (103), in particular magnetic bearing rotors, wherein the mounting bearing (100) has: a fork (104), a rotor adjustment device (101) which has a guide bolt (105), and an adjustment element (102), wherein the rotor adjustment device (101) is designed to receive the rotor (103) during the mounting of the rotor (103); and wherein the adjustment element (102) is designed to adjust the vertical and/or horizontal position of the rotor (103) received on the rotor adjustment device (101); wherein the guide bolt (105) of the rotor adjustment device (101) is displaceable vertically in the fork (104).

2. Mounting bearing (100) according to Claim 1, which furthermore has at least one setting screw (102), wherein the vertical and/or horizontal position of the rotor (103) can be adjusted by means of the at least one setting screw (102).

3. Mounting bearing (100) according to Claim 1 or 2, wherein the vertical and/or horizontal position of the rotor can be adjusted by means of a rotation of the rotor adjustment device (101) about at least one centre of rotation (408).

4. Mounting bearing (100) according to one of Claims 1 to 3, wherein the rotor adjustment device (101) has guide rollers (306, 406) which are designed for rotatably bearing the received rotor (103).

5. Mounting bearing (100) according to Claim 4, wherein the rotor adjustment device (101) has a guide bolt (407) which is designed such that the guide rollers (406) are adjustable horizontally along an axis of the guide bolt (407).

6. Mounting bearing (100) according to Claims 1 to 5, wherein the rotor adjustment device (101, 301, 401) is formed as a rotor adjustment plate.

7. Method for the mounting bearing of a rotor (103), in particular of a magnetic bearing rotor, in a mounting bearing (100) which has a rotor adjustment device (101) and an adjustment element (102), wherein the rotor adjustment device (101) has a guide bolt (105) which is displaceable vertically in a fork (104) of the mounting bearing (100) during the adjustment of the vertical position of the rotor (103); wherein the method comprises: receiving the rotor (103) in the rotor adjustment device (101), adjusting the vertical and/or horizontal position of the rotor (103) received on the rotor adjustment device (101) by means of the adjustment element (102) .

## Revendications

1. Palier de montage (100) pour rotors (103), en particulier rotors à palier magnétique, dans lequel le palier de montage (100) présente : une fourche (104) ; un dispositif d'ajustement de rotor (101) qui présente un boulon-guide (105), et un élément d'ajustement (102), dans lequel le dispositif d'ajustement de rotor (101) est aménagé afin d'accueillir le rotor (103) lors du montage du rotor (103) ; et dans lequel l'élément d'ajustement (102) est aménagé afin d'ajuster le positionnement vertical et/ou horizontal du rotor (103) accueilli sur le dispositif d'ajustement du rotor (101) ; le boulon-guide (105) du dispositif d'ajustement de rotor (101) étant déplaçable verticalement dans la fourche (104) .

2. Palier de montage (100) selon la revendication 1, lequel présente en outre au moins une vis de réglage (102), le positionnement vertical et/ou horizontal du rotor (103) étant ajustable au moyen de l'au moins une vis de réglage (102).

3. Palier de montage (100) selon la revendication 1 ou 2, dans lequel le positionnement vertical et/ou horizontal du rotor est ajustable au moyen d'une rotation du dispositif d'ajustement de rotor (101) autour d'au moins un centre de rotation (408).

4. Palier de montage (100) selon l'une des revendications précédentes 1 à 3, dans lequel le dispositif d'ajustement de rotor (101) présente des galets de guidage (306, 406) aménagés afin de loger en rotation le rotor (103) accueilli.

5. Palier de montage (100) selon la revendication 4, dans lequel le dispositif d'ajustement de rotor (101) présente un boulon-guide (407) aménagé de sorte que les galets de guidage (406) soient déplaçables horizontalement le long d'un axe du boulon-guide (407).

6. Palier de montage (100) selon la revendication 1 à 5, dans lequel le dispositif d'ajustement de rotor (101, 301, 401) est exécuté sous la forme d'une tôle d'ajustement de rotor.

7. Procédé de montage d'un rotor (103), en particulier d'un rotor à palier magnétique dans un palier de montage (100), lequel présente un dispositif d'ajustement de rotor (101) et un élément d'ajustement (102), dans lequel le dispositif d'ajustement de rotor (101) présente un boulon-guide (105), lequel est déplaçable dans une fourche (104) du palier de montage (100) durant l'ajustement du positionnement vertical du rotor (103) ; le procédé présentant :
l'accueil du rotor (103) dans le dispositif d'ajustement du rotor (101)
l'ajustement du positionnement vertical et/ou horizontal du rotor (103) accueilli sur le dispositif d'ajustement du rotor (101) au moyen de l'élément d'ajustement (102).
